# EUROPÄISCHE PATENTSCHRIFT

(11) **EP 2 241 904 B1**
(45) Veröffentlichungstag und Bekanntmachung des Hinweises auf die Patenterteilung: **14.05.2014**
(21) Anmeldenummer: 10158055.3
(22) Anmeldetag: 26.03.2010
(51) Int. Cl.: G01S 19/34, G01S 1/00

(54) **Vorrichtung zum Orten eines beweglichen Objektes und Verfahren zum Betrieb der Vorrichtung**
Device for locating a mobile object and method for operating same
Dispositif de localisation d'un objet mobile et procédé de fonctionnement du dispositif

(30) Priorität: 30.03.2009 DE 102009015544
(43) Veröffentlichungstag der Anmeldung: 20.10.2010
(73) Patentinhaber: Libify Technologies GmbH, 80686 München (DE)
(72) Erfinder: Hölscher, Julian, 81247 München (DE)
(74) Vertreter: Reitstötter - Kinzebach

(56) Entgegenhaltungen:
- WO-A2-2007/076539
- US-A- 5 448 773
- US-A1- 2003 122 708
- US-B1- 6 172 640

## Beschreibung

Die vorliegende Erfindung betrifft eine Vorrichtung zum Orten eines beweglichen Objektes, insbesondere eines Haustieres, wie beispielsweise eines Hundes oder einer Katze, und ein Verfahren zum Betrieb einer derartigen Vorrichtung.

In vielen Bereichen des täglichen Lebens ist es erwünscht, bewegliche Objekte zu orten und ihre Bewegung zu verfolgen. Bei den zu ortenden Objekten kann es sich beispielsweise um Transportmittel, wie Fahrzeuge, Schiffe oder Flugzeuge, Warensendungen, wie einzelne Pakete oder ganze Container, Personen, insbesondere hilfsbedürftige ältere Personen oder Kinder, oder Tiere, insbesondere freilaufende Haus- oder Nutztiere, handeln. Ein besonders präzises und flexibles bekanntes Ortungssystem ermittelt Positionsdaten auf der Basis eines satellitengestützten Navigationssystems und überträgt diese Daten über ein drahtloses Kommunikationsnetzwerk an ein oder mehrere entfernte Endgeräte der Empfänger, wie beispielsweise Mobilfunktelefone oder Computerterminals. Die Ortungsvorrichtung selbst ist mit dem zu ortenden beweglichen Objekt verbunden und umfasst Ortungsmittel, welche auf der Basis eines satellitengestützten Navigationssystems arbeiten, Kommunikationsmittel zur Übertragung von Positionsdaten über ein drahtloses Kommunikationsnetz, Steuerungsmittel zur Steuerung der Ortungsmittel und der Kommunikationsmittel, sowie Energieversorgungsmittel, welche die Ortungsmittel, die Kommunikationsmittel und die Steuerungsmittel mit Strom versorgen. Insbesondere wenn es sich bei dem zu ortenden und zu verfolgenden Objekt um einen Menschen oder ein Tier handelt, muss die Ortungsvorrichtung möglichst leicht und kompakt ausgebildet sein. Daher sind auch die mögliche Größe und das Gewicht der Energieversorgungsmittel, bei denen es sich typischerweise um wiederaufladbare Batterien handelt, begrenzt. Daher ist es erforderlich, insbesondere die Ortungsmittel, also den Empfänger der Satellitensignale, und die Kommunikationsmittel der Ortungsvorrichtung möglichst energiesparend zu betreiben, damit ein möglichst langer Betrieb gewährleistet ist, bevor eine Wiederaufladung der Batterien erforderlich wird.

In der internationalen Patentanmeldung WO 2006/092466 A1 werden verschiedene Verfahren zur Reduzierung der Kosten und des Energieverbrauchs bei der Ortung beweglicher Objekte mittels eines GPS(Global Positioning System)-Empfängers zu verringern. So wird beispielsweise vorgeschlagen, die Ortungsvorrichtung so lange in einem Betriebsmodus mit reduziertem Energieverbrauch (Standby) zu betreiben, bis per Textnachricht (SMS) eine Positionsanforderung von einem externen Nutzer des Systems eintrifft. Dieser Betriebsmodus ist zwar sehr energiesparend, jedoch kann die präzise Ortung der Vorrichtung abhängig von der Aktualität der in dem GPS-Empfänger gespeicherten Daten selbst bei optimalem Satellitenempfang recht lange dauern. Im ungünstigsten Fall, wenn der GPS-Empfänger so lange ausgeschaltet war, dass die im Empfänger gespeicherten Almanachdaten gegenüber den aktuellen Almanachdaten stark verändert oder nicht bekannt sind, kann eine Positionsbestimmung bis zu 12,5 Minuten dauern. Im typischen Anwendungsfall, bei dem die jeweils für ein Jahr gültigen Almanachdaten aktuell, aber die nur jeweils vier Stunden gültigen Ephemerisdaten nicht mehr aktuell sind, dauert eine Positionsbestimmung bei optimalem Satellitenempfang höchstens 45 Sekunden. Sind sogar die Ephemerisdaten aktuell, was immer dann der Fall ist, wenn zwei aufeinanderfolgende Positionsbestimmungen innerhalb desselben vierstündigen Gültigkeitsfensters der Ephemerisdaten liegen, beträgt die zur Positionsbestimmung erforderliche Zeitdauer typischerweise unter 15 Sekunden.

Die US 2008/0150797 A1 beschreibt ein Verfahren zur Reduzierung des Energieverbrauchs eines GPS-Empfängers. Das dort angegebene Verfahren macht sich die Datenstruktur eines GPS-Bitstroms zunutze. Dabei sind die Daten in Blöcke von je 300 Bits unterteilt, die über einen Zeitraum von 6 Sekunden ausgesendet werden. Die ersten 30 Bits eines Blocks stellen das sogenannte, zur Synchronisation dienende TLM-Word ("Telemetry-Word") mit einer bekannten Bitfolge und einer Checksumme dar. Die darauffolgenden 30 Bits stellen das sogenannte HOW-Word ("Hand-Over-Word") dar, in dem unter anderem 17 Bits enthalten sind, die die verstrichene Anzahl von 6-Sekundenintervallen seit dem zurückliegenden Sonntag, 0 Uhr anzeigen. In dem Verfahren wird nun vorgeschlagen, unter schlechten Empfangsbedingungen nur diesen Bruchteil von 20% zu empfangen und für die übrigen Zeitintervalle den Empfänger zum Stromsparen auszuschalten.

Selbst die Positionsbestimmung per Einzelabfrage kann jedoch sehr energieaufwendig werden, wenn der Satellitenempfang sehr schlecht oder völlig unmöglich ist.

In der US 2005/0033515 A1 ist ein persönliches Navigationssystem und ein dazu geeignetes Verfahren beschrieben, bei dem mittels eines Geräts zur drahtlosen Kommunikation, eines Pedometers und eines elektronischen Kompasses der Standort einer Person nachverfolgt werden kann. Das Gerät kann zusätzlich über einen GPS-Empfänger verfügen, der die Genauigkeit der Positionierung an den Standorten verbessern kann, an denen GPS-Satellitendaten empfangen werden können. Wo dies nicht der Fall ist, wird vorgeschlagen, den GPS-Empfänger herunterzufahren, um die Batterieressourcen zu schonen.

Auch ein Betriebsmodus, bei welchem das zu ortende Objekt kontinuierlich verfolgt wird, ist sehr energieaufwendig, da in diesem Fall der GPS-Empfänger ständig in Betrieb in regelmäßigen Abständen eingeschaltet wird.

Bei einem weiteren energieaufwendigen Betriebsmodus, der üblicherweise bei der Überwachung von Personen oder Tieren relevant wird, wird eine Überwachungszone definiert und ein Alarm ausgelöst, beispielsweise eine Textnachricht an einen Empfänger verschickt, sobald das zu überwachende Objekt die Überwachungszone verlässt. Auch hier wird der GPS-Empfänger entweder kontinuierlich betrieben oder in kurzen Zeitintervallen eingeschaltet.

In der US 6 972 684 B2 wird ein Verfahren beschrieben, bei dem der Standort von Personen mittels eines tragbaren Sendemoduls überwacht werden kann. Dabei sendet das Sendemodul periodisch verschlüsselte Nachrichten über den Standort an eine Überwachungseinheit. Falls sich die betreffende Person aus einem vordefinierten Bereich herausbewegt kann eine Warnmeldung herausgegeben und die Zeit zwischen zwei versendeten Nachrichten verkürzt werden.
Der vorliegenden Erfindung liegt daher das technische Problem zugrunde, ein Verfahren zum Betrieb einer Vorrichtung zum Orten eines beweglichen Objektes anzugeben, welches möglichst energiesparsam arbeitet und dabei gleichzeitig eine schnelle und präzise Positionsbestimmung des zu überwachenden Objektes ermöglicht. Ferner soll eine entsprechende Vorrichtung zum Orten eines beweglichen Objektes angegeben werden, bei welcher das erfindungsgemäße Verfahren implementiert ist und welche eine einfache und nutzerfreundliche Einstellung unterschiedlicher Betriebsmodi, insbesondere eine einfache Einstellung von Überwachungszonen ermöglicht.

Gelöst wird das technische Problem durch das erfindungsgemäße Verfahren zum Betrieb einer Vorrichtung zum Orten eines beweglichen Objektes, wobei die Vorrichtung Ortungsmittel, welche auf der Basis eines satellitengestützten Navigationssystems arbeiten, Kommunikationsmittel zur Übertragung von Positionsdaten über ein drahtloses Kommunikationsnetz, Steuerungsmittel zur Steuerung der Ortungsmittel und der Kommunikationsmittel, sowie Energieversorgungsmittel umfasst, wobei man in wenigstens einem Betriebsmodus der Vorrichtung die Ortungsmittel in Abhängigkeit von der Empfangsqualität der von den Ortungsmitteln empfangenen Satellitensignale betreibt. Das erfindungsgemäße Verfahren ist **dadurch gekennzeichnet, dass** man die Ortungsmittel einschaltet, während eines vorgegebenen maximalen Suchzeitraums ET4 Satellitendaten erfasst und die Ortungsmittel für einen vorgegebenen Ruhezeitraum ET1 ausschaltet, wenn während des Suchzeitraums ET4 kein Satellit erfasst wird.

Überraschend wurde nämlich gefunden, dass man insbesondere bei schlechtem oder völlig unzureichendem Satellitenempfang den zur Ortung eines beweglichen Objektes erforderlichen Energieaufwand drastisch reduzieren kann. Erfindungsgemäß wird also vorgeschlagen, in jedem Betriebsmodus der Ortungsvorrichtung zumindest die Ortungsmittel, vorzugsweise aber auch den Hauptprozessor der Steuerungsmittel, der neben den Ortungsmitteln ein wesentlicher Energieverbraucher ist, nicht nur auf Anforderung, periodisch oder kontinuierlich zu betreiben, sondern bei jedem dieser Betriebsmodi die Einschaltdauer des GPS-Empfängers und ggf. des Hauptprozessors der Steuerungsmittel auch in Abhängigkeit von der Empfangsqualität der Satelliten des satellitengestützten Navigationssystems auszuwählen.

Wenn sich die Ortungsvorrichtung beispielsweise mitten in einem größeren Haus oder einem Keller befindet und daher kein Satellitensignal verfügbar ist, kann eine solche für eine Positionsbestimmung völlig unzureichende Empfangssituation bereits dadurch erkannt werden, wenn innerhalb eines bestimmten Suchzeitraums überhaupt kein Satellit erfasst wird. Bei dem erfindungsgemäßen Verfahren werden daher die Ortungsmittel entweder nach einer externen Aufforderung oder nach einem vorgegebenen Zeitintervall eingeschaltet, während eines vorgegebenen maximalen Suchzeitraums ET4 Satellitendaten erfasst. Wenn nach Ablauf des maximalen Suchzeitraums ET4 überhaupt kein Satellit erfasst worden ist, kann davon ausgegangen werden, dass sich die Ortungsvorrichtung in einer Umgebung mit völlig unzureichendem Satellitenempfang befindet. Erfindungsgemäß werden die Ortungsmittel daher für einen vorgegebenen Ruhezeitraum ET1 ausgeschaltet, da unter diesen Empfangsbedingungen auch eine längere Suche keinen Erfolg hätte. Frühestens nach Ablauf des Ruhezeitraums ET1 werden die Ortungsmittel wieder eingeschaltet und ein neuer Ortungsversuch gestartet. Die Vorgabe des Suchzeitraums ET4 bzw. des Ruhezeitraums ET1 sind abhängig vom jeweiligen Anwendungsfall, wobei beispielsweise die mittlere Geschwindigkeit des zu überwachenden Objektes, die erforderliche Genauigkeit der Positionsbestimmung bzw. die erforderliche Aktualisierungsrate der Positionsbestimmung eingehen. Bei der Überwachung von Haustieren, wie beispielsweise Hunden, liegt der Suchzeitraum ET4 typischerweise im Bereich von 10-60 Sekunden, bevorzugt bei etwa 30 Sekunden. Der Ruhezeitraum ET1 liegt beispielsweise im Bereich von 30-3.600 Sekunden, bevorzugt bei etwa 180 Sekunden. Gegenüber dem Dauerbetrieb bei unzureichendem Satellitenempfang wird also die Lebensdauer der Batterie um den Quotienten ET1/ET4 verlängert.

Wenn innerhalb des Suchzeitraums ET4 wenigstens ein Satellit erfasst wurde, lässt man die Ortungsmittel maximal für einen vorgegebenen Erfassungszeitraum ET2, der größer als der Suchzeitraum ET4 ist, eingeschaltet und führt eine Positionsbestimmung der Ortungsvorrichtung durch. Da für eine Positionsbestimmung die Erfassung von mehr als einem Satelliten erforderlich ist, wird erfindungsgemäß also vorgeschlagen, auch den Erfassungszeitraum von Satellitendaten zu begrenzen, da bei relativ schlechten Empfangsbedingungen, wenn beispielsweise nur Daten weniger Satelliten und/oder Daten von Satelliten, die bezüglich des zu ortenden Objektes ungünstig ausgerichtet sind, empfangen werden, keine ausreichend genaue Positionsbestimmung möglich ist, so dass eine zeitliche Begrenzung des Erfassungszeitraums auch hier zu einer Energieeinsparung führt.

Zur Charakterisierung der Empfangsqualität der von den Ortungsmitteln empfangenen Satellitendaten wird vorzugsweise ein Genauigkeitswert der mittels der Satellitendaten bestimmten Position der Ortungsvorrichtung herangezogen. Kommerziell erhältliche Satellitenempfänger sind nämlich in der Lage, aus der Position der empfangenen Satelliten sowie der Signalstärke des jeweiligen Satellitensignals nicht nur eine Positionsangabe, sondern auch eine Genauigkeitsangabe, dem sogenannten HDoP (Horizontal Dilution of Precision)-Wert zu errechnen. Der HDOP-Wert drückt in Zahlen aus, wie günstig die momentane geometrische Verteilung der Satelliten am Himmel des Beobachters für die Ermittlung der horizontalen Position ist und korreliert mit der Genauigkeit der Positionsbestimmung. Gemäß einer bevorzugten Ausführungsform des erfindungsgemäßen Verfahrens legt man daher einen ersten Genauigkeitswert HD1 fest, und ermittelt bei jeder Positionsbestimmung die Genauigkeit der Position. Wenn die ermittelte Genauigkeit mindestens dem ersten vorgegebenen Genauigkeitswert HD1 entspricht oder besser ist, wird der ermittelte Positionswert gespeichert und die Ortungsmittel für den Ruhezeitraum ET1 ausgeschaltet, selbst wenn der Erfassungszeitraum ET2 noch nicht abgelaufen ist. Bei sehr gutem Satellitenempfang wird so eine weitere Energieeinsparung ermöglicht.

Wenn während des Erfassungszeitraums eine erste Positionsbestimmung erfolgt ist, der ermittelte Genauigkeitswert aber größer als der erste vorgegebene Genauigkeitswert HD1 ist, wird so lange weitergemessen, bis die Genauigkeit der Positionsbestimmung den Wert HD1 erreicht. Wenn auch nach Ablauf des Erfassungszeitraums ET2 keine Positionsbestimmung mit einer dem ersten vorgegebenen Genauigkeitswert HD1 entsprechenden Genauigkeit möglich war, aber die Genauigkeit mindestens einem zweiten vorgegebenen Genauigkeitswert HD2 entspricht, wird der Positionswert mit einem zugehörigen Qualitätsmerkmal, beispielsweise dem Genauigkeitswert oder einer Markierung "ungenau" gespeichert und die Ortungsmittel für den Ruhezeitraum ET1 ausgeschaltet. Somit kann auch bei schlechtem Satellitenempfang eine ungefähre Position des zu überwachenden Objektes an einen entfernten Empfänger gesendet werden, wobei der Empfänger außerdem die Information erhält, dass die Positionsangabe ungenau ist. Bei der Überwachung eines Haustieres, wie beispielsweise eines Hundes, liegt der Erfassungszeitraum ET2 typischerweise im Bereich von 50-300 Sekunden, bevorzugt bei etwa 50 Sekunden. Der erste Genauigkeitswert HD1, der einer genauen Positionsbestimmung entspricht, liegt beispielsweise bei einem HDoP-Wert von 2,5, was mit der erfindungsgemäßen Ortungsvorrichtung einer Genauigkeit von etwa 25 Metern entspricht. Die Obergrenze für eine ungenaue Positionsbestimmung, d.h. der zweite vorgegebene Genauigkeitswert HD2, liegt typischerweise bei einem HDoP-Wert von 10, was einer Genauigkeit von 100 Metern entspricht. Beim Anwendungsbeispiel der Überwachung eines Hundes werden Positionsangaben mit einer Genauigkeit, die schlechter als 100 Meter ist, verworfen, da bei einer solchen Ungenauigkeit kein zuverlässiges Wiederauffinden des Hundes möglich ist.

Eine typische Eigenschaft einer Positionsbestimmung mittels eines satellitengestützten Navigationssystems ist es, dass die Genauigkeit der Positionsbestimmung eines ruhenden Empfängers verglichen mit einem sich bewegenden Empfänger abnimmt und daher die vom Empfänger ermittelte Position mehr oder weniger stark um die tatsächliche Ruheposition des Empfängers schwanken kann. Bei einem Betriebsmodus der erfindungsgemäßen Ortungsvorrichtung, bei dem eine Überwachungszone eingerichtet ist und durch regelmäßige Positionsbestimmungen überwacht werden soll, ob das zu überwachende Objekt mit der darin angebrachten Ortungsvorrichtung die Überwachungszone verlässt, kann sich daher die Situation ergeben, dass bei einer innerhalb der Überwachungszone ruhenden Ortungsvorrichtung bei einer Positionsbestimmung plötzlich ein Positionswert angezeigt wird, der außerhalb der Überwachungszone liegt. Statt nun, wie an sich vorgesehen, einen Alarm auszulösen, kann es in diesem Fall vorteilhaft sein, zunächst nach einem bestimmten vorgegebenen Wiederholungszeitraum ET3, der kürzer als der Ruhezeitraum ET1 ist, eine erneute Positionsbestimmung durchzuführen. Erst wenn auch die erneute Positionsbestimmung außerhalb der Überwachungszone liegt, kann zuverlässig davon ausgegangen werden, dass das zu überwachende Objekt die Überwachungszone verlassen hat, so dass erst nach der Wiederholungsmessung ein Alarm ausgelöst wird. Bei der Überwachung eines Hundes erweisen sich Wiederholungszeiträume im Bereich von 30-240 Sekunden, vorzugsweise bei etwa 60 Sekunden als besonders geeignet.

Für eine besonders einfache Handhabung weist die Ortungsvorrichtung vorzugsweise ein von dem Nutzer betätigbares Bedienelement auf, das einer vorgegebenen Überwachungszone zugeordnet ist, wobei man erfindungsgemäß die Überwachungszone und den zugeordneten Betriebsmodus durch einfaches Betätigen des Bedienelementes aktiviert. Das vom Nutzer betätigbare Bedienelement kann dabei typischerweise manuell bedient werden, beispielsweise über einen an sich bekannten Drückschalter. Eine manuelle Bedienung ist einfach zu handhaben und daher in vielen Situationen vorteilhaft.

Alternativ oder auch zusätzlich kann vorgesehen sein, die zugeordnete Überwachungszone auch über Fernbedienung drahtlos zu ändern, zu aktivieren, zu deaktivieren und/oder die manuelle Betätigungsfunktion des Bedienelements drahtlos zu sperren oder zu entsperren. Dies ist insbesondere vorteilhaft, wenn die Ortungsvorrichtung in einem Hundehalsband angeordnet ist. Hat beispielsweise der Hundhalter vergessen, die Überwachungsfunktion einzuschalten, oder ist ihm der Hund weggelaufen, ohne dass er die Überwachung hätte aktivieren können, so kann er dies mittels Fernbedienung drahtlos, beispielsweise mit seinem Mobilfunkendgerät über eine Textnachricht, z.B. eine SMS, nachholen. Insbesondere kann er auch die manuelle Bedienung für den Nahbereich nutzen, diese aber dann sperren, wenn der Hund nicht in seiner Reichweite ist, um zu vermeiden, dass der Hund durch Wälzen oder Spielen mit anderen Hunden versehentlich eine Funktion über das manuelle Bedienelement auslöst. Bei einer periodischen Überwachung, beispielsweise bei Überwachung des Hundes innerhalb einer vorgegebenen Überwachungszone, wiederholt man die oben beschriebenen Satellitenerfassungs- und Positionsbestimmungsschritte in vorgegebenen Intervallen. Besonders bevorzugt wiederholt man diese Schritte nach Ablauf des oben genannten Ruhezeitraums ET1 automatisch.

Erfindungsgemäß ist die Ortungsvorrichtung vorzugsweise auch in einem Suchmodus betreibbar. Wenn beispielsweise ein Nutzer einen entlaufenen Hund sucht, ist eine möglichst rasche Positionsbestimmung und Rückmeldung der Position an den entfernten Nutzer entscheidend. Daher können die Ortungsmittel im Suchmodus quasi kontinuierlich betrieben werden, um nach einer Positionsanforderung sofort die aktuelle Position mitteilen zu können. Mit dem erfindungsgemäßen Verfahren wird aber auch in diesem Fall nur ein quasi kontinuierlicher Betrieb der Ortungsmittel durchgeführt, weil eine Ortung bei völlig unzureichendem Satellitenempfang auf jeden Fall nach Ablauf des Suchzeitraums ET4 abgebrochen wird, wenn kein einziger Satellit erfasst worden ist.

Wie oben bereits erwähnt, werden gemäß einer bevorzugten Ausführungsform des erfindungsgemäßen Verfahrens nicht nur die Ortungsmittel, sondern auch Datenverarbeitungsmittel der Steuerungsmittel, beispielsweise ein Hauptprozessor zur Verarbeitung der empfangenen Satelliten daten , in Abhängigkeit von der Empfangsqualität der von dem Ortungsmittel empfangenen Satellitensignale betrieben, als beispielsweise bei schlechtem Empfang in einen Ruhezustand versetzt oder ausgeschaltet.

Gemäß einem Betriebsmodus werden die Satellitenerfassungs- und Positionsbestimmungsschritte erst durchgeführt, wenn die Kommunikationsmittel eine Positionsanforderung eines externen Terminals empfangen.

Die ermittelte und vorzugsweise gespeicherte Position der Ortungsvorrichtung wird dann über die Kommunikationsmittel an wenigstens einen externen Empfänger übertragen. Typischerweise handelt es sich dabei um den Besitzer des zu überwachenden Gegenstandes, der die Position auf einem entsprechend angepassten Endgerät empfangen kann. Es kann jedoch auch ein Dienstleister dazwischengeschaltet sein, der zusätzlich oder alternativ zum eigentlichen Empfänger die Positionsdaten empfängt und in aufbereiteter Form an den eigentlichen Nutzer weitergibt. Beispielsweise kann ein mit modernen Kommunikationsmitteln weniger vertrauter Nutzer mittels einer Telefonhotline zu dem zu ortenden Objekt geleitet werden.

Eine zuverlässige Überwachung des Objektes ist jedoch dann nicht gewährleistet, wenn sich die Ortungsvorrichtung nicht mehr an dem zu überwachenden Objekt befindet. Falls es sich bei dem zu überwachenden Objekt um einen Hund handelt, kann sich die Ortungsvorrichtung beispielsweise beim Spielen mit anderen Hunden oder beim Rennen durch das Unterholz lösen. Außerdem würde ein Dieb versuchen, die Ortungsvorrichtung vom Hund zu trennen, damit eine Verfolgung des Hundes nicht mehr möglich ist. Gemäß einer bevorzugten Ausführungsform des erfindungsgemäßen Verfahrens ist daher vorgesehen, dass die Ortungsvorrichtung permanent oder periodisch mit einer fest mit dem zu ortenden Objekt verbundenen Identifikationseinrichtung, beispielsweise einem aktiven oder passiven Transponder, kommuniziert und einen Alarm auslöst, sobald keine Rückmeldung von der Identifikationsvorrichtung mehr empfangen wird. So sind heute bereits viele Hunde mit einem verkapselten RFID-Chip ausgerüstet, auf dem eine eindeutige Registriernummer gespeichert ist und der üblicherweise im Halsbereich in die Unterhaut implantiert wird. Gemäß einer bevorzugten Ausführungsform kommuniziert die Ortungsvorrichtung mit einem solchen RFID-Chip, so dass gewährleistet ist, dass sich die Ortungsvorrichtung stets am Hund befindet.

Die wesentlichen Nutzerparameter der Ortungsvorrichtung sind vorzugsweise entweder drahtlos, beispielsweise per Textnachricht oder über eine integrierte Bluetooth-Schnittstelle, oder drahtgebunden, beispielsweise über eine U S B-Schnittstelle, programmierbar. So können vorzugsweise der Suchzeitraum, der Erfassungszeitraum, der Wiederholungszeitraum oder der Ruhezeitraum sowie die gewünschte Genauigkeit der Messung (HD1 und HD2) abhängig von den Umständen des Einzelfalls programmiert werden. Ebenso sind die Überwachungszonen programmierbar.

Gemäß einer bevorzugten Ausführungsform des erfindungsgemäßen Verfahrens werden die Positionsanforderung und/oder die ermittelte Position der Vorrichtung zum Orten und/oder der Alarm und/oder die Programmier- oder Bedienbefehle als Textnachrichten (SMS) in einem Mobilfunknetz übertragen.

Zur Verfolgung der Position der Ortungsvorrichtung werden üblicherweise Positionsangaben in regelmäßigen Zeitabständen an den Empfänger übermittelt. Es kann daher vorkommen, dass viele Übertragungen von Positionsangaben an den Empfänger stattfinden, obwohl sich die Ortungsvorrichtung nicht oder nur sehr wenig weiterbewegt. Gemäß einer besonders bevorzugten Ausführungsform der Erfindung werden die Positionsangaben daher nicht in regelmäßigen Zeitabständen, sondern in Abhängigkeit von der zurückgelegten Strecke der Ortungsvorrichtung an den Empfänger übermittelt. Verlässt die Ortungsvorrichtung beispielsweise einen vorher definiertes Areal oder schaltet man die Vorrichtung aktiv in einen Verfolgungs- oder Trackingmodus, wird eine erste Position an den Empfänger übermittelt. Diese erste Position legt man dann als Mittelpunkt einer ersten Überwachungszone mit vorgegebenem Radius fest und übermittelt eine Position erst dann an den Empfänger, wenn die neue ermittelte Position außerhalb der ersten Überwachungszone liegt. Dann legt man die neue ermittelte Position als Mittelpunkt einer zweiten Überwachungszone mit vorgegebenem Radius fest und wartet mit einer Positionsübermittlung wieder, bis die Ortungsvorrichtung die zweite Überwachungszone verlassen hat. Die zweite Überwachungszone ist somit um den Verschiebungsvektor zwischen ersten und zweiter ermittelter Position gegenüber der ersten Überwachungszone verschoben. Dadurch wird beispielsweise einem Hundehalter immer nur dann eine Textnachricht übermittelt, wenn der Hund sich aus der Überwachungszone herausbewegt. Durch die Neufestlegung der Überwachungszone bleiben aber lästige, unter Umständen sehr häufige Meldungen aus, wenn sich der Hund alternierend außerhalb und innerhalb entlang der Überwachungsgrenze bewegt.

Die ermittelten Positionen aus der Textnachricht können extrahiert werden und die nacheinander extrahierten Positionen in einer Karte auf einer Anzeigefläche eines Mobilfunkendgeräts dargestellt werden. Auf diese Weise lässt sich das Bewegungsmuster des Hundes als eine Zickzack-Bahn visualisieren. Tests haben ergeben, dass ein Hund, der bei der Jagd 15 Kilometer zurücklegt, bei angemessenem Radius der Überwachungszone, z.B. einige 100 Meter, auf diese Weise nur wenige Textnachrichten auslöst. Vorzugsweise lässt sich der Radius der Überwachungszone programmieren, um die Überwachungszone beispielsweise an den konkreten Anwendungsfall und die Geländesituation anzupassen. Die Überwachungszonen sind bei einer bevorzugten Variante des Verfahren zwar kreisförmig, jedoch können bei geeigneter Ausgestaltung der Software auch andere lassen sich auch anders geformte Flächenlassen

Gemäß einer Variante des erfindungsgemäßen Verfahrens wird zusätzlich zu der ermittelten Position der Ortungsvorrichtung zumindest die Identität der aktuell für die Übertragung im Mobilfunknetz verwendeten Funkzelle (Funkzellen-ID) an wenigstens einen zentralen Empfänger übertragen. Somit kann im Laufe der Zeit bei dem zentralen Empfänger eine Datenbank aufgebaut werden, die eine Zuordnung von Geokoordinaten zu Funkzellen-lDs ermöglicht. Damit kann dann auch in Fällen, in denen überhaupt kein Satellitenempfang möglich ist, aber eine Kontaktaufnahme mit der Ortungsvorrichtung über das Mobilfunknetz erfolgt, zumindest eine grobe Ortung anhand der aktuell verwendeten Funkzelle durchgeführt werden. Zusätzlich zur Identität der Funkzelle können auch die Signalstärke der aktuellen Funkzelle und Identitäten und Signalstärken weiterer benachbarter Funkzellen übertragen werden, so dass mittels Triangulation eine noch genauere Ortsbestimmung innerhalb der Funkzelle ermöglicht wird, falls bei einer späteren Suche in einem derart kartierten Bereich eine Ortung ohne Satellitenempfang erforderlich sein sollte. Bei ausreichend großer Datenbasis kann beispielsweise auch ein Energiesparmodus implementiert werden, bei welchem die satellitengestützten Ortungsmittel nicht eingeschaltet werden und eine Ortung lediglich anhand der Funkzellendaten und der entsprechenden in der Datenbank gespeicherten Geokoordinaten erfolgt.
Gegenstand der Erfindung ist auch eine Vorrichtung zum Orten eines beweglichen Objektes, die Ortungsmittel, welche auf der Basis eines satellitengestützten Navigationssystems arbeiten, Kommunikationsmittel zur Übertragung von Daten über ein drahtloses Kommunikationsnetz, Steuerungsmittel zur Steuerung der Ortungsmittel und der Kommunikationsmittel und Energieversorgungsmittel umfasst, wobei die Steuerungsmittel so ausgelegt sind, dass Ortungsmittel in Abhängigkeit von der Empfangsqualität der von den Ortungsmitteln empfangenen Satellitensignale betreibbar sind. Die erfindungsgemäße Vorrichtung dadurch gekennzeichnet ist, dass die Ortungsmittel derart steuerbar sind, so dass sie während eines vorgegebenen maximalen Suchzeitraums ET4 eingeschaltet sind, um Satellitendaten zu erfassen, und für einen vorgegebenen Ruhezeitraum ET1 ausgeschaltet sind, wenn während des Suchzeitraums ET4 kein Satellit erfasst wird.

Vorzugsweise ist bei der erfindungsgemäßen Vorrichtung wenigstens ein Bedienelement vorgesehen, über welches wenigstens eine Überwachungszone aktivierbar ist. Gemäß einer bevorzugten Ausführungsform weist die Vorrichtung beispielsweise zwei Bedienelemente auf, wobei ein Bedienelement einer fest eingestellten Heimzone zugeordnet ist, die vorzugsweise aber ebenfalls programmierbar ist, und ein weiteres Bedienelement einer flexiblen Überwachungszone zugeordnet ist, deren Zentrum beispielsweise durch einmaliges Betätigen des Bedienelementes festgelegt wird.

Dem wenigstens einen Bedienelement ist vorzugsweise abhängig von der Betätigungsdauer des Bedienelementes eine zweite Funktion zugeordnet.

Die erfindungsgemäße Vorrichtung ist gemäß einer besonders bevorzugten Ausführungsform als Halsband für Tiere, insbesondere als Hunde- oder Katzenhalsband ausgebildet.

Gemäß einer bevorzugten Ausführungsform umfasst das Halsband zwei auf gegenüberliegenden Seiten des Halsbandes angeordnete Gehäuse, wobei ein erstes Gehäuse die Ortungsmittel und ein zweites Gehäuse die Kommunikationsmittel, die Steuerungsmittel und die Energieversorgungsmittel aufweist. Durch die entsprechende Verteilung der Komponenten auf die beiden Gehäuse ist gewährleistet, dass das zweite Gehäuse deutlich schwerer als das erste Gehäuse ist. Wird das Halsband bei einem Hund angelegt, so sorgt die Schwerkraft dafür, dass das schwerere zweite Gehäuse auf die Unterseite des Halses rutscht und damit gleichzeitig das leichtere erste Gehäuse mit den Ortungsmitteln, also insbesondere mit dem Satellitenempfänger, nach oben zum Himmel gerichtet ist, so dass ein verbesserter Empfang der Satellitensignale gewährleistet ist.

Die Ortungsmittel sind vorzugsweise über in dem Halsband geführte elektrische Leitungen mit den Steuerungsmitteln, den Energieversorgungsmitteln und den Kommunikationsmitteln verbunden.

Das zweite Gehäuse weist gemäß einer bevorzugten Ausführungsform der erfindungsgemäßen Vorrichtung elektrische Kontakte auf, über welche die Steuerungsmittel programmiert und die Energieversorgungsmittel aufgeladen werden können. Beispielsweise können die elektrischen Kontakte Teil eines USB-Anschlusses sein, so dass Datenübertragung und Aufladung der Batterien über dieselbe Leitung erfolgen können.

Die Kommunikationsmittel umfassen vorzugsweise ein Mobilfunkmodul, beispielsweise ein GSM- oder ein UMTS-Modul. In dem zweiten Gehäuse ist dazu vorzugsweise eine verschließbare Öffnung zum Einsetzen einer sogenannten SIM-Karte vorgesehen, welche gleichzeitig eine eindeutige Identifikation der Ortungsvorrichtung ermöglicht. Vorzugsweise ist die Ortungsvorrichtung selbst auch so ausgebildet, dass nur Positionsanfragen von bestimmten vorgegebenen Nutzern verarbeitet werden.

Wenn die erfindungsgemäße Vorrichtung zum Orten von freilaufenden Tieren eingesetzt wird, ist es insbesondere bevorzugt, das erste und zweite Gehäuse, insbesondere den SIM-Karten¬erschluss und die in dem zweiten Gehäuse angeordneten Bedienelemente wasserdicht auszubilden.

Vorzugsweise umfassen die Steuerungsmittel Datenverarbeitungsmittel, insbesondere einen Mikroprozessor, zur Verarbeitung der von den Ortungsmitteln bzw. den Kommunikationsmitteln gelieferten Daten. Der Mikroprozessor kann auch eine Aufbereitung der Positionsdaten vornehmen, so dass beispielsweise nicht nur die Positionsdaten selbst, sondern auch Relativpositionen zu vorprogrammierten Markierungspunkten ermittelt und per Textnachricht an den Nutzer übertragen werden können.

Die Ortungsmittel umfassen typischerweise einen Empfänger für Satellitensignale eines satellitengestützten Navigationssystems, beispielsweise einen GPS-Empfänger. Auch andere Satellitensignale, wie beispielsweise das derzeit im Aufbau befindliche Satellitennavigationssystem "Galileo" der Europäischen Union können zur Positionsbestimmung herangezogen werden.

Bei einer bevorzugten Ausführungsform der erfindungsgemäßen, als Hunde- oder Katzenhalsband ausgebildeten Vorrichtung ist die Bedieneinheit in das erste, leichtere Gehäuse, in welchem sich das GPS-Empfänger befindet, integriert. Die Bedieneinheit ist daher auch bei angelegten Halsband leicht zugänglich, da sie sich stets an der Oberseite des Hundes befindet. Die Bedieneinheit umfasst bei dieser Ausführungsform wenigsten 3 Bedientaster: einen EIN/AUS-Taster, einen Heimzonen-Taster (HeimZone) zur Aktivierung eines vorprogrammierten Überwachungsbereich und Taster zur Aktivierung eines flexiblen Überwachungsbereich(FlexZone). Ein längeres Drücken des Bedientasters EIN/AUS-Tasters am Halsband des Tieres schaltet man das GPS- und das GSM-Modul ein. Nach 30 sec schaltet das Halsband auf Standby sofern keine weitere Eingabe vorgenommen wird. Im eingeschalteten Zustand kann durch erneutes kurzes Drücken des EIN/AUS-Tasters ein energiesparender ECO-Modus aktiviert werden, wodurch nur noch das GSM-Modul aktiviert bleibt, während das GPS-Modul deaktiviert wird. Ein erneutes Drücken der Bedientaste EIN/AUS oder eine Fernaktivierung durch ein Funktelefon schaltet das Halsband zurück in den Normalbetrieb Der Vorteil der automatischen Standbyschaltung und dem ECO-Modus liegt im einsparen von Energie. Das Halsband kann somit länger ohne nachzuladen betrieben werden. Der Tierhalter erhält damit mehr zeitliche Flexibilität bei der Anwendung dieses Halsbandes.

Ein längeres Drücken des Bedientasters für die Heimzone am Halsband des Tieres ändert den Kreismittelpunkt der Heimzone entsprechend dem augenblicklichen Standort des Tieres mit dem Halsband. Eine schnell zu ändernden Heimzone bringt dem Tierhalter den Vorteil das Tier schnell für längere Zeit an einen anderen Orte umzusiedeln. Ein kurzes Drücken des Bedientasters für die Heimzone am Halsband des Tieres aktiviert die Heimzone. Die Heimzone kann geometrisch als Kreis abgegrenzt werden. Erneutes kurzes Drücken des Bedientasters für die Heimzone am Halsband des Tieres deaktiviert die Heimzone. Der Vorteil der aktivierten Heimzone besteht darin, dass der Tierhalter informiert wird, sobald das Tier die Heimzone verlässt und wieder zurück in die Heimzone kommt.

Ein längeres Drücken des Bedientasters für die flexible Zone am Halsband des Tieres ändert den Kreismittelpunkt der flexiblen Zone entsprechend dem augenblicklichen Standort des Tieres. Eine schnell zu ändernden flexible Zone bringt dem Tierhalter den Vorteil, dass das Halsband schnell für eine vorübergehende Zonenüberwachung an einem von der Heimzone verschiedenen Ort eingerichtet werden kann. Ein kurzes Drücken des Bedientasters für die flexible Zone aktiviert die flexible Zone. Die flexible Zone kann geometrisch als Kreis abgegrenzt werden. Erneutes kurzes Drücken des Bedientasters für die flexible Zone deaktiviert die flexible. Der Vorteil der aktivierten flexiblen Zone besteht darin, dass der Tierhalter informiert wird, sobald das Tier die flexible Zone verlässt und wieder zurück in die Zone kommt.

Gemäß einer bevorzugten Weiterbildung des erfindungsgemäßen Verfahrens umfasst das Halsband einen wiederaufladbare Batterie als Energieversorgungsmittel. Gemäß einer bevorzugten Weiterbildung des erfindungsgemäßen Verfahrens kann die Batterie ohne separate Entnahme aus dem Halsband direkt in einer Ladestation aufgeladen werden. Die Ladestation kann an der Wand befestigt werden und wird über ein USB-Kabel elektrisch versorgt. Außerdem können über die Ladestation und das USB-Kabel die in dem Halsband gespeicherten Informationen auf dem PC ausgelesen werden und Benutzereinstellungen am Halsband geändert werden. Das Halsband kann sehr einfach in die Ladestation eingesetzt werden, so dass das Halsband einen festen Platz hat und bei Gebrauch stets aufgeladen ist. Das USB-Kabel stellt wegen der niedrigen Spannung und Ströme keine elektrische Gefahrenquelle dar.

Die Erfindung wird im Folgenden anhand einer als Hundehalsband ausgebildeten Ausführungsform unter Bezugnahme auf beigefügte Zeichnungen näher erläutert.
- Fig. 1: zeigt schematisch den Aufbau einer Ausführungsform der Vorrichtung zum Orten eines beweglichen Objektes;
- Figur 2a: zeigt eine perspektivische Ansicht einer Ausführungsform des Hundehalsbandes;
- Figur 2b: zeigt eine vergrößerte Darstellung der Bedieneinheit des Hundehalsbandes der Fig. 2a;
- Figur 3: zeigt eine Ausführungsform einer Lade- und Datenübertragungsstation für das Hundehalsband der Fig. 2a;
- Figur4: zeigt schematisch den Informationsaustausch zwischen dem Hundehalsband der Fig. 2a und einem als entferntem Endgerät dienenden Mobiltelefon;
- Figur 5: zeigt ein Beispiel eines Kartenausschnitts mit von dem Hundehalsband übertragenen Positionsinformationen; und
- Figur6: zeigt schematisch die Überwachung eines Hundes mit Positionsinformationen in vorgegebenen Überwachungszonen.

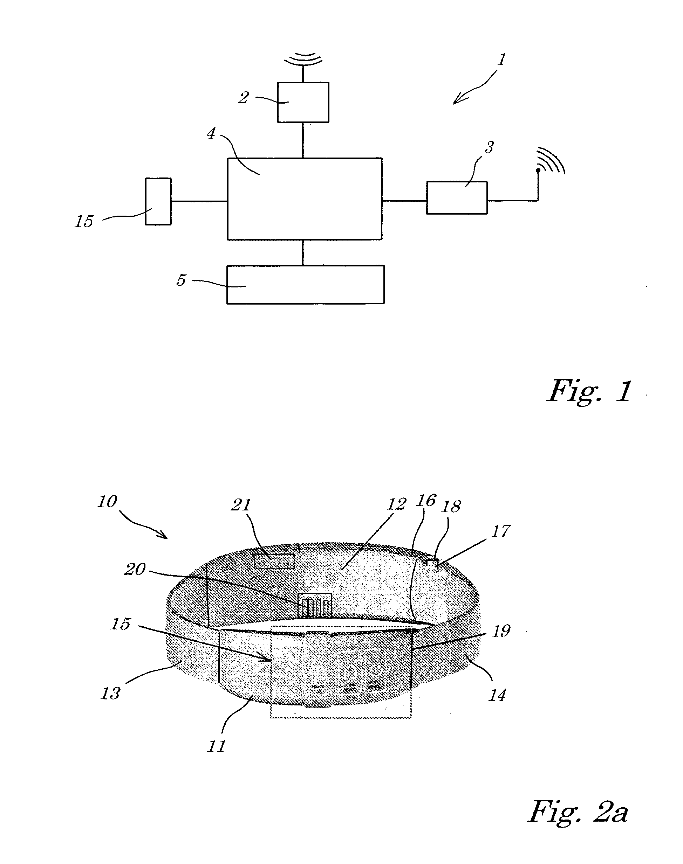

In Figur 1 ist schematisch der Aufbau eines Ausführungsbeispiels der Vorrichtung 1 zum Orten eines beweglichen Objektes dargestellt. Die Vorrichtung 1 umfasst einen GPS-Empfänger zum Erfassen von Positionsdaten, ein Mobilfunkmodul 3, das nach einem gängigen Standard, beispielsweise GSM oder UMTS arbeitet. Der GPS-Empfänger 2 und das Mobilfunkmodul 3 sind mit Steuerungsmitteln 4 verbunden, die von Energieversorgungsmitteln 5 in Form einer Batterie mit elektrischen Strom versorgt werden und diesen an den GPS-Empfänger 2 und das Mobilfunkmodul 3 weiterverteilen. Die Steuermittel 4 steuern dabei den Stromverbrauch des GPS-Empfängers 2 in Abhängigkeit von der Empfangsqualität der von dem GPS-Empfänger 2 empfangenen Satellitensignalen gemäß dem erfindungsgemäßen Verfahren, das weiter unten noch im Detail erläutert wird.

In Fig. 2a ist eine Ausführungsform der als Hundehalsband ausgebildeten erfindungsgemäßen Ortungsvorrichtung dargestellt.

Im wesentlichen besteht das Halsband 10 aus einem ersten Gehäuse 11, in welchem Ortungsmittel, wie beispielsweise ein (hier nicht dargestellter) kommerziell erhältlicher GPS-Empfänger, eingebaut sind, und einem zweiten Gehäuse 12, in welchem Kommunikationsmittel, wie beispielsweise ein ebenfalls kommerziell erhältliches GSM-Modul, die Steuerungselektronik und die Energieversorgungsmittel, beispielsweise ein Lithiumionen-Akkumulator mit einer Kapazität von 1000 mAh, eingebaut sind. GPS steht dabei für Global Positioning System und meint ein satellitengestütztes System zur weltweiten Positionsbestimmung. GSM steht für Global System for Mobile Communications und umfasst einen Standard für volldigitale Mobilfunknetze zur hauptsächlichen Nutzung der Telefonie, aber auch zum versenden von Kurzmitteilungen, wie z. B. Short Messages SMS.
Die Gehäuse weisen eine an den Hals des Hundes angepasste, innenseitig konkave Form auf. Die beiden Gehäuse 11, 12 sind mit jeweils einem Polyurethanband 13, 14 links und rechts miteinander verbunden. Das erste Gehäuse 12 weist außerdem auf seiner halsabgewandten Oberseite eine Bedieneinheit 15 auf, die weiter unten genauer beschrieben wird.

Auf einer Seite des zweiten Gehäuses 12 ist ein Verschlussteil 16 angeordnet, in welches ein komplementäres, am Ende des Polyurethanbandes 14 angeordnetes Verschlussteil 17 einrasten kann. Ein versenkt in dem Verschlussteil 17 angeordneter Druckknopf 18 dient zum einfachen Öffnen des Rastverschlusses. Das dem Verschlussteil 17 gegenüberliegenden Ende 19 des Bandes 14 ist lösbar in dem ersten Gehäuse 11 verschraubt und kann zur Längenpassung herausgenommen und passend zugeschnitten werden. Die Strom- und Datenverbindungskabel werden daher in dem gegenüberliegenden Band 13 geführt, das die Gehäuse 11 und 12 fest verbindet.

An dem das GSM-Modul und die Steuerelektronik enthaltenden zweiten Gehäuse 12 befinden sich halsseitig elektrischen Kontaktflächen 20, über die mittels einer weiter unten beschriebenen Ladestation der in dem zweiten Gehäuse 20 befindliche Akku aufgeladen und die Steuerelektronik programmiert werden kann. Außerdem befindet sich halsseitig am zweiten Gehäuse 12 ein mit einem bündig mit der Gehäusefläche abschließender Deckel 21 wasserdicht verschließbarer Steckplatz zur Aufnahme einer Mobilfunkkarte (SIM-Slot). SIM steht für Subscriber Identity Module und meint eine Chipkarte, die in ein Funktelefon eingesteckt werden kann und zur Identifikation des Nutzers im Netz dient.

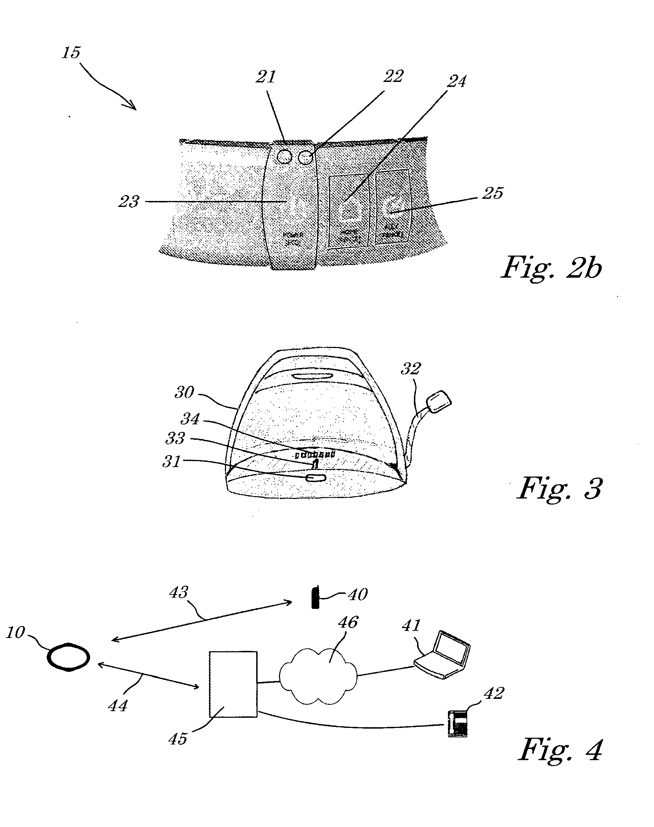

In Fig. 2b werden die Elemente der Bedieneinheit 15 ohne nähere Funktionserklärung beschrieben. Die Bedieneinheit 15 umfasst zwei Statusanzeigen, die Statusanzeige 22 für GSM-Betrieb und die Statusanzeige 22 für GPS-Betrieb. Die Bedieneinheit umfasst weiterhin drei Bedientaster, den Taster 23 für EIN/AUS, bzw. ECO-Modus, den Taster 24 zur Definition der Heimzone und den Taster 25 zur Definition der flexiblen Zone

In Fig. 3 ist eine insgesamt mit der Bezugsziffer 30 bezeichnete Ladestation für das Hundhalsband 10 dargestellt. Die Ladestation weist eine Statusanzeige 31 auf und kann als Tischgerät oder (über eine nicht dargestellte rückseitige Wandhalterung) als Wandgerät verwendet werden. Die Ladestation selbst bezieht die elektrische Energie über ein USB-Kabel 32. Das USB-Kabel 32 kann zu Ladezwecken mit einem (nicht dargestellten) Netzteil oder einem USB-Anschluss eines ebenfalls nicht dargestellten Computers verbunden werden.

In Fig. 4 ist schematisch der Informationsaustausch zwischen dem Hundehalsband 10 und verschiedenen Engeräten 40, 41, 42 eines Nutzers dargestellt. Das Halsband 10 und ein Mobilfunkgerät 40 des Nutzers können beispielsweise über eine Mobilfunkstrecke 44 miteinander kommunizieren und beispielsweise Textnachrichten (SMS) austauschen. So kann die Position des Hundes beispielsweise in Form einer Textnachricht auf dem Mobilfunkgerät angezeigt oder, bei entsprechender Grafikunterstützung, die Textnachricht in eine Positionsanzeige innerhalb einer Kartendarstellung umgewandelt werden. Zwischen Endnutzer und Halsband 10 kann jedoch auch ein Dienstleister 45 zwischengeschaltet sein, der über eine Mobilfunkstrecke 46 mit dem Halsband 10 kommuniziert und beispielsweise Positionsangaben aufbereitet, so das diese beispielweise vom Nutzer über einer Computer 41 per Webbrowser über das Internet 46 abgerufen werden oder per Telefon 42 über eine Hotline des Dienstleisters 45 abgefragt werden können.

Als nächstes wird ein praxisnahes Anwendungsbeispiel erläutert, welches die wesentlichen Funktionen des Halsbands und seine Bedienung zeigt.

Nachdem der Tierhalter im Besitz eines solchen Halsbandes 10 mit Ladestation 30 und entsprechendem Zubehör ist, kann die Erstinbetriebnahme starten. Im einfachsten Fall hat der Tierhalter das Halsband 10 beim Händler vorkonfigurieren lassen. Das Halsband 10 hat somit bereits alle relevanten Einstellungen programmiert, so dass das Halsband 10 ggf. nur noch nachgeladen werden muss. Hat der Tierhalter das Halsband 10 jedoch unkonfiguriert erworben, befestigt er zuerst die Ladestation 30 an der Wand und verbindet mit dem USB-Kabel 32 die Ladestation 30 mit dem Netzteil. Zur korrekten Positionierung des Halsbands 10 in der Ladestation 30 befindet sich auf der Innenseite des zweiten Gehäuses 12 eine kleine Rille (Bezugsziffer 26 in Fig. 1), die in eine komplementäre Führungsschiene (Bezugsziffer 33 in Fig. 3) der Ladestation 30 greift. Durch Einrasten des Halsbands 10 in die Ladestation 30 werden die elektrischen Kontaktflächen 20 der sogenannten Pogo-Stecker des Halsbandes bzw. der Ladestation (Bezugszeichen 34 in Fig.) zusammengebracht und die Aufladung des in dem Gerät befindlichen Lithium-Polymer-Akkus beginnt, sobald das Netzteil sich in der Steckdose befindet. Während des Ladevorgangs blinkt die LED 31 an der Vorderseite der Ladestation 30 grün und sobald der Akku vollständig geladen ist, leuchtet die LED 31 an der Ladestation 30 permanent grün.

Bevor im nächsten Schritt die separat gekaufte SIM-Karte, egal ob Prepaid- oder Vertragsbasierend, in den SIM-Slot 21 eingelegt werden kann, ist sicherzustellen, dass die PIN der SIM-Karte für das Halsband 10 mit der vom Halsband 10 erwarteten PIN übereinstimmt. Über seinen Service-Provider kann der Tierhalter die PIN der SIM-Karte auf die normalerweise im Halsband voreingestellte PIN, z. B. 1234, ändern lassen. Darüber hinaus kann der Tierhalter die PIN der SIM-Karte auch selbst mit seinem Funktelefon 40 ändern, indem er die für das Halsband 10 bestimmte SIM-Karte in sein Funktelefon einlegt und die PIN entsprechend ändert. Letztendlich kann der Tierhalter auch die vom Halsband 10 erwartete PIN per Software an die PIN der SIM-Karte anpassen. Die Anwendung der Software wird erst weiter unten beschrieben. Da nun die PIN abgeglichen wurde, braucht die SIM-Karte nur noch in den bis zu 1 m Tiefe wasserdichten SIM-Slot 21 des Halsbands eingelegt werden. Um bei einer Prepaid-SIM-Karte das Restguthaben nicht unwissend voll zu erschöpfen und dadurch die Ortbarkeit des Tieres auszuschließen, können Serviceprovider verschiedene Vertragsvarianten vereinbart werden. In Frage käme z. B. eine automatische Wiederaufladung der Prepaid-SIM-Karte oder zumindest der Erhalt einer automatisch generierten SMS beim unterschreiten eines bestimmten Restguthabens. Ansonsten bestände für den Tierhalter auch noch die Möglichkeit das Restguthaben per SMS Befehl "guthaben" zu erfragen, indem der er eine SMS mit dem Inhalt "guthaben" an die Telefonnummer vom Halsband 10 schickt und eine SMS als Antwort erhält.

Zur Inbetriebnahme muss jedoch das Halsband durch längeres Drücken des EIN/AUS-Tasters 23 eingeschalten werden, um die Benutzereinstellungen zu konfigurieren. Die GSM- und GPS-Statusanzeigen 21, 22 beginnen zu blinken. Sobald eine Verbindung zum GSM-Netzwerk besteht, leuchtet die GSM-Statusanzeige 21 permanent. Sobald GPS-Signale empfangen werden, leuchtet auch die GPS-Statusanzeige 22 permanent. Dies kann jedoch bei der ersten Inbetriebnahme und nach längerer Nichtbenutzung des Gerätes einige Minuten dauern. Die Benutzereinstellungen können nun per SMS-Befehlssatz oder per PC konfiguriert werden. Hier wird jetzt nur die SMS-Konfiguration per SMS-Befehlssatz erläutert, wobei die PC-Konfiguration entsprechend ähnlich ablaufen würde. Generell gibt es zur Änderung der entsprechenden Benutzereinstellungen diverse SMS-Befehle in Form von Buchstabenfolgen in Anlehnung an den Befehlsinhalt. Thematisch seien hier einige wichtige Befehlsbeschreibungen genannt, die der Tierhalter über die SMS-Befehle entsprechend umsetzen muss, wie z. B. Tiernamen registrieren, ein oder mehrere Funktelefone registrieren und aktivieren, Koordinatenformat einstellen, Sprache für SMS-Nachrichten festlegen, Zeitzone einstellen, Längeneinheit auswählen, SMS-Antwort mit Koordinaten oder Kartenlink auswählen etc. Zur Erleichterung für den Tierhalter besitzt das Halsband bereits praktikable Voreinstellungen für die nicht individuellen Parameter, die später noch beschrieben werden.

Im nächsten Schritt wird das Halsband 10 für das Tier entsprechend angepasst. Dazu wird der Verschluss zur Längenanpassung auf die entsprechende Halsumfanglänge des Tieres so gekürzt, dass es das Tier bequem hat und das Tier sein Halsband nicht selbst abstreifen kann. Zum Anlegen des Halsbands wird der Verschlussmechanismus 16, 17 durch Betätigen des Druckkopfes 18 geöffnet. Dann wird das Halsband dem Tier um den Hals gelegt und geschlossen.

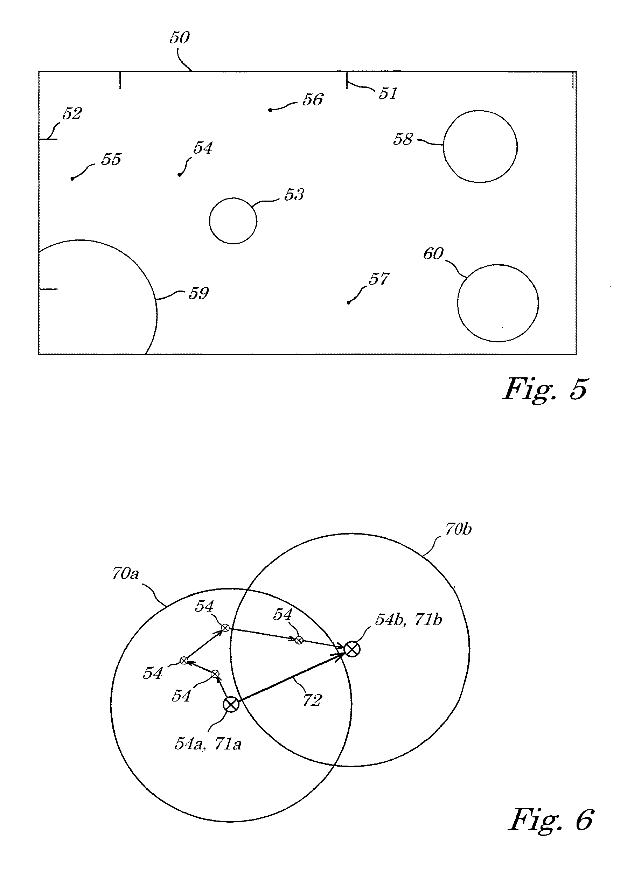

Im folgenden wenden die Einstellungen des Halsbandes an die konkrete Nutzungssituation angepasst. Wie anhand des schematischen Kartenausschnitts in Fig. 5 schematisch erläutert können dazu beispielsweise eine Heimzone und markante Positionen in deren Umgebung festgelegt werden. Fig. 5 zeigt einen Karteausschnitt 50 mit Längengraden 51 und Breitengraden 52. Die Heimzone 53 umgibt mit einstellbarem Radius den Hauptaufenthaltsort des Hundes, beispielsweise das Grundstück, in welchem sich das Tier frei bewegen darf. Durch ein längeres Drücken des Heimzonen-Bedientasters 24 am Halsband des Tieres wird der Kreismittelpunkt der Heimzone 53 entsprechend dem augenblicklichen Standort des Tieres mit dem Halsband festgelegt. Per SMS-Befehl kann der dazugehörige Heimzonen Radius neu festgelegt werden, falls der vorprogrammierte Standardwert geändert werden soll. Durch ein kurzes Drücken des Heimzonen-Tasters am Halsband des Tieres wird die Heimzone 53 aktiviert. Der Tierhalter bekommt somit eine SMS-Nachricht, sobald das Tier die Heimzone verlässt bzw. in die Heimzone zurückkehrt. Wenn sich das Tier jetzt am Fluchtort 54 befindet, kann die SMS-Nachricht z. B. folgenden Informationen beinhalten, " (Tiername) befindet sich auf Längengrad x und Breitengrad y, 100m Nord-West der Heimzone".

Zur leichteren Interpretation von SMS-Nachrichten besteht außerdem die Möglichkeit, diverse markante Referenzpunkte (55, 56, 57) in der Umgebung der Heimzone 53 in dem Halsband 10 zu speichern. Der Tierhalter geht dazu beispielsweise mit dem Halsband zu den Referenzpunkten und programmiert diese entsprechend einzeln per SMS-Befehl ein. Auch ein Programmierung am Computer unter Verwendung des Kartenmaterials ist möglich. Diesen Referenzpunkten können auch Namen per SMS-Befehl oder per Computerprogrammierung zugewiesen werden. Wenn sich das Tier jetzt am Fluchtort 54 befindet, kann die SMS-Nachricht so lauten "(Tiername) befindet sich auf Längengrad x und Breitengrad y, 100m Nord-West der Heimzone, 75m Ost vom (Referenzpunkt 55), 150m Süd-West vom (Referenzpunkt 56), 225m Nord-West vom (Referenzpunkt 57)".
Wenn sich das Tier gemäß letzter SMS-Mitteilung am Fluchtort 54 befindet und dann beliebig weit weiterläuft, kann der Tierhalter per SMS-Befehl einen sinnvollen Suchradius z einprogrammieren. Der Tierhalter bekommt damit eine weitere SMS-Mitteilung, sobald sich das Tier vom ursprünglichen Fluchtort 54 über den einprogrammierten Suchradius hinausbewegt hat usw.

Das erfindungsgemäße Halsband 10 kann auch so programmiert werden, dass der Tierhalter eine Nachricht erhält, wenn sein Tier in eine vordefinierte Gefahrenzone (in Fig. 5 exemplarisch durch die Zonen 58, 59 dargestellt) eintritt, um in diesem Fall sein Tier besonders schnell zurückholen zu können. Der Mittelpunkt einer Gefahrenzone 58, 59 wird wie ein Referenzpunkt festgelegt. Per SMS-Befehl kann der dazugehörige Radius neu einprogrammiert werden und ebenso ein Name der Gefahrenzone zugewiesen werden.

Unabhängig von irgendwelchen Zonen kann der Tierhalter jederzeit den Standort des Tieres mit dem Halsband durch eine entsprechende SMS-Nachricht anfordern.

Sollte der Akku fast leer sein, empfängt der Tierhalter automatisch eine SMS-Mitteilung, um bei nächster Gelegenheit den Akku des Halsbandes in der Ladestation aufzuladen.

Falls der zu überwachende Hund seinen Hauptaufenthaltsort längerfristig ändern sollte, kann der Nutzer sämtliche Einstellungen problemlos umprogrammieren und den neuen Gegebenheiten anpassen.

Zur vorübergehenden Festlegung eines neuen zentralen Standortes eignet sich der Taster 25 zur Definition einer flexiblen Zone. Wenn der Tierhalter mit seinem Tier beispielsweise in einem entfernten Waldgebiet spazieren möchte, kann er vor dem Verlassen der Heimzone 53 durch kurzes drücken des Bedientasters 22 am Halsband 10 des Tieres die Heimzone 53 deaktivieren. Sobald der Tierhalter mit seinem Tier den Ausgangspunkt seines Spazierganges erreicht hat, kann er durch ein längeres Drücken des Bedientasters 25 am Halsband den Kreismittelpunkt der flexiblen (in Figur 5 durch den Kreis 60 symbolisiert) entsprechend dem augenblicklichen Standort festlegen. Ein kurzes Drücken des Bedientasters 25 aktiviert dann die flexible Zone 60 mit dem entsprechend einprogrammierten Radius, so dass der Tierhalter informiert wird, sobald das Tier die FlexZone60 0 verlässt bzw. und wieder in die flexible Zone 60 zurückkehrt. Auch während des Spaziergangs kann der Tierhalter jederzeit den Standort des Tieres mit dem Halsband per SMS-Befehl erfragen. Sobald eine flexible Zone 60 im Gerät festgelegt ist, nehmen die SMS-Mitteilungen zusätzlich diesen Bezug. Durch eine kurzes Drücken des Bedientasters 25 wird die flexible Zone wieder deaktiviert.

Falls das Tier sich generell frei bewegen kann, z. B. auf eine Farm, und der Tierhalter nur ab und zu die aktuelle Position des Tieres wissen möchte, kann der besonders energiesparende ECO-Modus angewandt werden. Der ECO-Modus kann im eingeschalteten Zustand durch kurzes Drücken des EIN/AUS-Tasters 23 aktiviert werden. Dadurch bleibt nur das GSM-Modul aktiviert, während das GPS-Modul deaktiviert wird. Der Energieverbrauch des Halsband wird damit erheblich reduziert. Trotzdem kann der Tierhalter jederzeit den Standort des Tieres mit dem Halsband per SMS-Befehl erfragen, da dadurch das GPS-Modul für die Ortsbestimmung eingeschalten und danach selbständig wieder ausgeschalten wird. Durch ein erneutes kurzes Drücken des EIN/AUS-Tasters 23 wird der ECO-Modus wieder deaktiviert. Mit einer 1000mAh-Batterie erreicht das Hundehalsband damit eine Bereitschaftsdauer, die im Bereich von 200 bis 350 Stunden liegt. Im Dauerbetrieb, wenn auch das GPS-Modul ständig betrieben wird, beträgt die maximale Betriebsdauer etwa 9 Stunden. Unter Ausnutzung der oben beschriebenen Betriebsmodi, bei denen auch die Empfangsqualität der GPS-Signale berücksichtigt wird, kann selbst der Dauerbetrieb auf knapp 11 Stunden verlängert werden. Bei den Zonenüberwachungsmodi liegt die Betriebszeit je nach Wahl der Such-, Erfassungs- und Ruhezeiträume im Bereich von 12 bis 170 Stunden, so dass die Laufzeit mit dem erfindungsgemäßen Verfahren deutlich verlängert werden kann.

Die beiden Statusanzeigen, die Statusanzeige 21 für GSM und die Statusanzeige 22 für GPS, sind an der Bedieneinheit 15 technisch durch LEDs realisiert. Dem Tierhalter geben diese LEDs Auskunft über den Status des Gerätes. Eine LED kann dabei AUS sein, blinken oder AN sein, wobei sich dementsprechend die Mitteilung für den Tierhalter ergibt. Ebenso könnten unterschiedlich farbige Lichtquellen verwendet werden oder sogar Displays mit verbalisierten Statusmeldungen zur Anwendung kommen.

Damit das Halsband eine Wasserdichtigkeit bis zu 1m Tiefe standhalten kann, sind die Lade- und Datenkontakte elektronisch gegen Kurzschluss gesichert, der SIM-Slot 21 mit weichen Gummi ausgelegt, die Bedientaster 23, 24 und 25 mit einer Silikoneinlage abgedichtet und die Gehäuseteile der Gehäuse 11, 12 mit in Nuten angeordneten umlaufenden Dichtungsringen versehen.

Die Positionsbefragung des getragenen Halsbands kann auch direkt durch einen Anruf mit einem Funktelefon erfolgen. Die Erwiderung könnte dann auditiv bzw. per SMS erfolgen. Sprachbefehle wären ebenso denkbar, sind jedoch technisch aufwändiger zu realisieren.

Die SMS-Mitteilungen können selbst auch einen Link ins Internet haben. Ein internetfähiges Funktelefon könnte auch direkt den Fluchtort des entlaufenen Tieres in einer auf dem Display dargestellte Karte anzeigen und den Tierhalter direkt zum entlaufenen Tier navigieren.

In Figur 6 ist schematisch die Überwachung eines Hundes mit Positionsinformationen in vorgegebenen Überwachungszonen gemäß einem Ausführungsbeispiel des erfindungsgemäßen Verfahrens dargestellt. Der Hund befinde sich an der Position 54a als Ausgangsposition. Um diese Position 54a wird eine Überwachungszone 70a gebildet, dessen Mittelpunkt 71a der Position 54a entspricht. Der Hund bewege sich nun weiter und gemäß dem erfindungsgemäßen Verfahren werden sukzessive weitere Positionen 54 durchlaufen, bis eine Position 54b außerhalb dieser vorgegebenen Überwachungszone 70a liegt. Sodann wird eine Textnachricht mit der ermittelten Position 54b der Vorrichtung 1 zum Orten übertragen, der Mittelpunkt 71a der Überwachungszone 70a bestimmt und anschließend eine neue Überwachungszone 70b mit neuem Mittelpunkt 71 b gebildet, die um den Verschiebungsvektor 72 zwischen Mittelpunkt 71 a und der ermittelten Position 54b verschoben ist.

Die so ermittelten Positionen 54a, 54b können aus den fortlaufend erhaltenen Textnachrichten extrahiert werden, und die nacheinander extrahierten Positionen 54a, 54b in einer Karte auf einer Anzeigefläche eines Mobilfunkendgeräts dargestellt werden. Die Aneinanderreihung der Verschiebungsvektoren 72 ergeben dann das Bewegungsprofil des Hundes.

Das sich in der Ladestation befindliche Halsband kann über das USB-Kabel direkt mit dem PC verbunden werden, um die Benutzereinstellungen für das Halsband zu ändern oder Bewegungsprofile des Tieres herunterzuladen.

Der PC oder Laptop kann auch direkt die Funktion vom Funktelefon übernehmen. Denn durch den großen Bildschirm am PC kann eine sehr große Karte mit der sehr genauen Position des entlaufenen Tieres angezeigt werden. Außerdem können die Bewegungsdaten vom Halsband kontinuierlich oder in angemessenen zeitlichen und räumlichen Schritten aufgezeichnet werden.

## Patentansprüche

1. Verfahren zum Betrieb einer Vorrichtung zum Orten eines beweglichen Objektes, die Ortungsmittel, welche auf der Basis eines satellitengestützten Navigationssystems arbeiten, Kommunikationsmittel zur Übertragung von Positionsdaten über ein drahtloses Kommunikationsnetz, Steuerungsmittel zur Steuerung der Ortungsmittel und der Kommunikationsmittel, sowie Energieversorgungsmittel umfasst, wobei man in wenigstens einem Betriebsmodus die Ortungsmittel in Abhängigkeit von der Empfangsqualität der von den Ortungsmitteln empfangen Satellitensignale betreibt,
wobei man die Ortungsmittel einschaltet, während eines vorgegebenen maximalen Suchzeitraums ET4 Satellitendaten erfasst und die Ortungsmittel für einen vorgegebenen Ruhezeitraum ET1 ausschaltet, wenn während des Suchzeitraums ET4 kein Satellit erfasst wird,
**dadurch gekennzeichnet,**
**dass** der maximale Suchzeitraum ET4 in Abhängigkeit von der Empfangsqualität der empfangenen Satelliten-Signale vorgegeben wird.

2. Verfahren gemäß Anspruch 1, wobei man, wenn innerhalb des Suchzeitraums ET4 wenigstens ein Satellit erfasst wurde, die Ortungsmittel maximal für einen Erfassungszeitraum ET2, der größer als der Suchzeitraum ET4 ist, eingeschaltet lässt und eine Positionsbestimmung der Vorrichtung durchführt,
wobei man vorzugsweise die Genauigkeit der Positionsbestimmung ermittelt und, wenn die Genauigkeit mindestens einem ersten vorgegebenen Genauigkeitswert HD1 entspricht, den Positionswert speichert und die Ortungsmittel für den Ruhezeitraum ET1 ausschaltet,
wobei man vorzugsweise, wenn nach Ablauf des Erfassungszeitraums ET2 keine Positionsbestimmung mit einer Genauigkeit, die mindestens dem ersten vorgegebenen Genauigkeitswert HD1 entspricht, erfolgt ist, aber die Genauigkeit mindestens einem zweiten vorgegebenen Genauigkeitswert HD2 entspricht, den Positionswert mit der Markierung "ungenau" speichert und die Ortungsmittel für den Ruhezeitraum ET1 ausschaltet.

3. Verfahren gemäß einem der Ansprüche 1 oder 2, wobei man, wenn die ermittelte Position außerhalb einer vorgegebenen Überwachungszone liegt, die Satellitenerfassungs- und Positionsbestimmungsschritte nach einem Wiederholungszeitraum ET3, der kürzer als der Ruhezeitraum ET1 ist, wiederholt, wobei die Vorrichtung vorzugsweise wenigstens ein vom Nutzer betätigbares Bedienelement aufweist, das der vordefinierten Überwachungszone zugeordnet ist, wobei man die zugeordnete Überwachungszone durch Betätigen des Bedienelementes aktiviert.

4. Verfahren gemäß einem der Ansprüche 1 bis 3, wobei man die Satellitenerfassungs- und Positionsbestimmungsschritte nach Ablauf des Ruhezeitraums ET1 automatisch wiederholt.

5. Verfahren gemäß einem der vorangegangenen Ansprüche, wobei die Steuerungsmittel Datenverarbeitungsmittel umfassen, die entsprechend der Ortungsmittel in Abhängigkeit von der Empfangsqualität der von den Ortungsmitteln empfangen Satellitensignale betrieben werden.

6. Verfahren gemäß einem der Ansprüche 1 bis 5, wobei das zu ortende Objekt eine Identifikationseinrichtung aufweist und die Ortungsmittel permanent oder periodisch mit der Identifikationseinrichtung kommunizieren und einen Alarm auslösen, wenn keine Rückmeldung von der Identifikationseinrichtung empfangen wird.

7. Verfahren gemäß einem der Ansprüche 1 bis 6, wobei die Vorrichtung wenigstens ein vom Nutzer manuell betätigbares Bedienelement aufweist, das einer vordefinierten Überwachungszone zugeordnet ist, wobei man die zugeordnete Überwachungszone drahtlos ändert, aktiviert, deaktiviert und/oder die manuelle Betätigungsfunktion des Bedienelements sperrt oder entsperrt.

8. Verfahren gemäß einem der Ansprüche 2 bis 7, wobei die ermittelte Position der Vorrichtung über die Kommunikationsmittel an wenigstens einen externen Empfänger übertragen wird, wobei man vorzugsweise die Satellitenerfassungs- und Positionsbestimmungsschritte durchführt, nachdem die Kommunikationsmittel eine Positionsanforderung eines externen Endgerätes empfangen haben, wobei die Vorrichtung vorzugsweise drahtlos oder drahtgebunden programmierbar ist und man die Positionsanforderung und/oder die ermittelte Position der Vorrichtung und/oder den Alarm und/oder die Programmier- oder Bedienbefehle bevorzugt als Textnachrichten (SMS) in einem Mobilfunknetz überträgt.

9. Verfahren nach Anspruch 7, wobei man die an einen externen Empfänger übermittelte Position der Vorrichtung als Mittelpunkt einer ersten Überwachungszone mit vorgegebenem Radius festlegt und eine neue ermittelte Position erst dann an den Empfänger übermittelt, wenn die neue ermittelte Position außerhalb der ersten Überwachungszone liegt, wobei man vorzugsweise die neue ermittelte Position als Mittelpunkt einer zweiten Überwachungszone mit vorgegebenem Radius festlegt.

10. Verfahren gemäß einem der Ansprüche 8 bis 10, wobei zusätzlich zu der ermittelten Position (54) zumindest die Identität der aktuell verwendeten Funkzelle des Mobilfunknetzes (43, 44) an wenigstens ein entferntes Endgerät (40) übertragen wird.

11. Vorrichtung (1) zum Orten eines beweglichen Objektes, die Ortungsmittel (2), welche auf der Basis eines satellitengestützten Navigationssystems arbeiten, Kommunikationsmittel (3) zur Übertragung von Daten über ein drahtloses Kommunikationsnetz (43, 44), Steuerungsmittel (4) zur Steuerung der Ortungsmittel (2) und der Kommunikationsmittel (3) und Energieversorgungsmittel (5) umfasst, wobei die Steuerungsmittel (4) so ausgelegt sind, dass die Ortungsmittel (2) in Abhängigkeit von der Empfangsqualität der von den Ortungsmitteln (2) empfangen Satellitensignale betreibbar sind,
wobei die Ortungsmittel (2) derart eingerichtet sind, dass sie während eines vorgegebenen maximalen Suchzeitraums ET4 eingeschaltet sind, um Satellitendaten zu erfassen, und für einen vorgegebenen Ruhezeitraum ET1 ausgeschaltet sind, wenn während des Suchzeitraums ET4 kein Satellit erfasst wird,
**dadurch gekennzeichnet,**
**dass** der maximale Suchzeitraum ET4 in Abhängigkeit von der Empfangsqualität der empfangenen Satellitensignale vorgegeben wird.

12. Vorrichtung gemäß Anspruch 11, **dadurch gekennzeichnet, dass** wenigstens ein Bedienelement (23, 24, 25) vorgesehen ist, über welches wenigstens eine Überwachungszone (53, 70) vorzugsweise drahtlos änderbar, aktivierbar oder deaktivierbar ist, wobei dem wenigstens einen Bedienelement (23, 24, 25) abhängig von der Betätigungsdauer vorzugsweise eine zweite Funktion zugeordnet ist.

13. Vorrichtung gemäß einem der Ansprüche 11 oder 12, **dadurch gekennzeichnet, dass** die Vorrichtung als Halsband (10) für Tiere, insbesondere für Hunde oder Katzen ausgebildet ist.

14. Vorrichtung gemäß Anspruch 13, wobei das Halsband (10) zwei auf gegenüberliegenden Seiten des Halsbandes (10) angeordnete Gehäuse umfasst, wobei ein erstes Gehäuse (11) die Ortungsmittel (2) und ein zweites Gehäuse (12) die Kommunikationsmittel (3), die Steuerungsmittel (4) und die Energieversorgungsmittel (5) enthält, wobei die Ortungsmittel vorzugsweise über in dem Halsband geführten elektrischen Leitungen mit den Steuerungsmitteln, den Energieversorgungsmitteln und den Kommunikationsmitteln verbunden sind und wobei das zweite Gehäuse (12) bevorzugt elektrische Kontakte (20) aufweist, über welche die Steuerungsmittel programmiert und die Energieversorgungsmittel aufgeladen werden können, wobei die Kommunikationsmittel vorzugsweise ein GSM-Modul umfassen und in dem zweiten Gehäuse eine verschließbare Öffnung (21) zum Einsetzen einer SIM-Karte vorgesehen ist, wobei das erste Gehäuse (11) und zweite Gehäuse (12), der SIM-Kartenverschluss (21) und in dem ersten Gehäuse angeordnete Bedienelemente (23, 24, 25) bevorzugt wasserdicht ausgebildet sind.

15. Vorrichtung gemäß einem der Ansprüche 11 bis 14, **dadurch gekennzeichnet, dass** die Steuerungsmittel (4) Datenverarbeitungsmittel, insbesondere einen Mikroprozessor, zur Verarbeitung der von den Ortungsmitteln (2) gelieferten Daten umfassen und dass die Ortungsmittel (2) einen GPS-Empfänger umfassen.

## Claims

1. Method for operating a device for locating a moving object, which device comprises locating means, which work on the basis of a satellite-assisted navigation system, communication means for transmitting position data via a wireless communication network, control means for controlling the locating means and communication means, and power supply means,
the locating means being operated, in at least one mode of operation, on the basis of the reception quality of satellite signals received by the locating means, the locating means being switched on and satellite data being detected during a preset maximum search period ET4 and said locating means being switched off for a preset rest period ET1 if no satellite is detected during the search period ET4,
**characterised in that** the maximum search period ET4 is preset on the basis of the reception quality of the received satellite signals.

2. Method according to claim 1, wherein, if at least one satellite has been detected within the search period ET4, the locating means remain switched on at the most for a detection period ET2, which is longer than the search period ET4, and the position of the device is determined,
wherein preferably the accuracy of the position determination is established and, if the accuracy corresponds to at least a first preset accuracy value HD1, the position value is stored and the locating means are switched off for the rest period ET1,
wherein preferably if, after the detection period ET2 has elapsed, a position has not been determined with an accuracy which corresponds to at least the first preset accuracy value HD1 but which corresponds to at least a second preset accuracy value HD2, the position value is preferably stored with the mark "inaccurate" and the locating means are deactivated for the rest period ET1.

3. Method according to either claim 1 or claim 2, wherein, if the established position is outside a preset monitoring zone, the satellite-detection and position-determination steps are repeated after a repetition period ET3, which is shorter than the rest period ET1, wherein the device preferably has at least one control element which can be actuated by the user and is assigned to the predefined monitoring zone, wherein the assigned monitoring zone is activated by actuation of the control element.

4. Method according to any of claims 1 to 3, wherein the satellite-detection and position-determination steps are repeated automatically after the rest period ET1 has elapsed.

5. Method according to any of the preceding claims, wherein the control means comprise data-processing means which are operated, analogously to the locating means, on the basis of the reception quality of the satellite signals received by the locating means.

6. Method according to any of claims 1 to 5, wherein the object to be located has an identification apparatus and the locating means communicate constantly or periodically with the identification apparatus and trigger an alarm if no response is received from the identification apparatus.

7. Method according to any of claims 1 to 6, wherein the device has at least one control element which can be actuated manually by a user and is assigned to a predefined monitoring zone, wherein the assigned monitoring zone is changed, activated and deactivated wirelessly and/or the manual actuation function of the control element is enabled or disabled.

8. Method according to any of claims 2 to 7, wherein the established position of the device is transmitted to at least one external receiver via the communication means, wherein preferably the satellite-detection and position-determination steps are carried out after the communication means have received a position request from an external terminal, wherein the device can preferably be programmed in a wireless or wired manner and the position request and/or the established position of the device and/or the alarm and/or the programming or control orders are preferably transmitted as text messages (SMS) in a mobile network.

9. Method according to claim 7, wherein the position of the device communicated to an external receiver is set as the centre of a first monitoring zone having a preset radius and a new established position is only communicated to the receiver if the new established position is outside the first monitoring zone, wherein preferably the new established position is set as the centre of a second monitoring zone having a preset radius.

10. Method according to any of claims 8 to 10, wherein, in addition to the established position (54), at least the identity of the currently used cell of the mobile network (43, 44) is transmitted to at least one remote terminal (40).

11. Device (1) for locating a moving object, comprising locating means (2), which work on the basis of a satellite-assisted navigation system, communication means (3) for transmitting data via a wireless communication network (43, 44), control means (4) for controlling the locating means (2) and the communication means (3), and power supply means (5), the control means (4) being designed such that the locating means (2) can be operated on the basis of the reception quality of the satellite signals received by the locating means (2),
the locating means (2) being designed so as to be switched on during a preset maximum search period ET4 in order to detect satellite data, and switched off for a preset rest period ET1 if no satellite is detected during the search period ET4,
**characterised in that** the maximum search period ET4 is preset on the basis of the reception quality of the received satellite signals.

12. Device according to claim 11, **characterised in that** at least one control element (23, 24, 25) is provided, by means of which at least one monitoring zone (53, 70) can be changed, activated or deactivated, preferably wirelessly, a second function preferably being assigned to the at least one control element (23, 24, 25) depending on the length of the actuation.

13. Device according to either claim 11 or claim 12, **characterised in that** the device is designed as a collar (10) for animals, in particular for dogs or cats.

14. Device according to claim 13, wherein the collar (10) comprises two housings arranged on opposite sides of the collar (10), wherein a first housing (11) contains the locating means (2) and a second housing (12) contains the communication means (3), the control means (4) and the power supply means (5), wherein the locating means are preferably connected to the control means, the power supply means and the communication means by electric wires guided in the collar, and wherein the second housing (12) preferably has electrical contacts (20) by means of which the control means can be programmed and the power supply means charged, wherein the communication means preferably comprise a GSM module and a closable opening (21) is provided in the second housing for inserting a SIM card, wherein the first housing (11) and second housing (12), the SIM card closure (21) and the control elements (23, 24, 25) arranged in the first housing are preferably water-tight.

15. Device according to any of claims 11 to 14, **characterised in that** the control means (4) comprise data-processing means, more particularly a microprocessor, for processing the data supplied by the locating means (2) and **in that** the locating means (2) comprise a GPS receiver.

## Revendications

1. Procédé d'exploitation d'un dispositif de localisation d'un objet mobile qui comprend des moyens de localisation fonctionnant sur la base d'un système de navigation par satellite, des moyens de communication pour la transmission de données de position par l'intermédiaire d'un réseau de communication, des moyens de commande pour le contrôle des moyens de localisation et des moyens de communication, ainsi que des moyens d'alimentation en énergie, les moyens de localisation étant exploités, dans au moins un mode de fonctionnement, en fonction de la qualité de réception des signaux satellite reçus, les moyens de localisation étant activés, pendant une période de recherche maximale ET4, les données satellite étant relevées et les moyens de localisation étant désactivés pendant une période de repos ET1 lorsque, pendant la période de recherche ET4, aucun satellite n'est détecté, **caractérisé en ce que** la période de recherche maximale ET4 est prédéfinie en fonction de la qualité de réception des signaux satellite reçus.

2. Procédé selon la revendication 1, les moyens de localisation étant laissés activés au maximum pendant une période de détection ET2, qui est supérieure à la période de recherche ET4, lorsqu'au moins un satellite a été détecté pendant la période de recherche ET4 et une détermination de la position du dispositif étant effectuée,
de préférence, la précision de la détermination de la position étant déterminée et, lorsque la précision correspond au moins à une première valeur de précision prédéfinie HD1, la valeur de la position étant enregistrée et les moyens de localisation étant désactivés pendant la période de repos ET1,
de préférence, lorsque, une fois la période de détection ET2 écoulée, aucune détermination de position n'a eu lieu avec une précision correspondant au moins à la première valeur de précision prédéterminée HD1, mais la précision correspond au moins à une deuxième valeur de précision prédéterminée HD2, la valeur de la position étant enregistrée avec l'identification « imprécis » et les moyens de localisation étant désactivés pendant la période de repos ET1.

3. Procédé selon l'une des revendications 1 ou 2, les étapes de détection de satellite et de détermination de la position étant répétées après une période de répétition ET3, plus courte que la période de repos ET1, lorsque la position déterminée se trouve en dehors d'une zone de surveillance prédéterminée, le dispositif comprenant de préférence au moins un élément de commande pouvant être actionné par l'utilisateur, cet élément correspondant à la zone de surveillance prédéfinie, la zone de surveillance correspondante étant activée grâce à l'actionnement de l'élément de commande.

4. Procédé selon l'une des revendications 1 à 3, les étapes de détection de satellite et de détermination de la position étant automatiquement répétées une fois la période de repos ET1 écoulée.

5. Procédé selon l'une des revendications précédentes, les moyens de commande comprenant des moyens de traitement de données exploités selon les moyens de localisation en fonction de la qualité de réception des signaux satellites reçus.

6. Procédé selon l'une des revendications 1 à 5, l'objet à localiser comportant un dispositif d'identification et les moyens de localisation communiquant en permanence ou de manière périodique avec le dispositif d'identification et déclenchant une alarme lorsque aucun retour n'est reçu du dispositif d'identification.

7. Procédé selon l'une des revendications 1 à 6, le dispositif comprenant au moins un élément de commande pouvant être actionné manuellement par l'utilisateur, correspondant à une zone de surveillance prédéfinie, la zone de surveillance correspondante étant modifiée, activée, désactivée et/ou bloquant ou débloquant la fonction d'actionnement manuel de l'élément de commande.

8. Procédé selon l'une des revendications 2 à 7, la position déterminée du dispositif étant transmise par les moyens de communication à au moins un récepteur externe, de préférence les étapes de détection de satellite et de détermination de la position étant effectuées une fois que les moyens de communication ont reçu une demande de position d'un terminal externe, le dispositif étant programmable de préférence sans fil ou de manière filaire et la demande de position et/ou la position déterminée du dispositif et/ou l'alarme et/ou les instructions de programmation ou de commande étant transmises en tant que messages textes (SMS) dans un réseau de téléphonie mobile.

9. Procédé selon la revendication 7, la position du dispositif transmise à un récepteur externe étant défini comme le centre d'une première zone de surveillance avec un rayon prédéterminé et une nouvelle position déterminée n'étant transmise au récepteur que lorsque la nouvelle position déterminée se trouve hors de la première zone de surveillance, de préférence la nouvelle position déterminée étant définie comme le centre d'une deuxième zone de surveillance avec un rayon prédéterminé.

10. Procédé selon l'une des revendications 8 à 10, au moins l'identité de la cellule radio actuellement utilisée du réseau de téléphonie mobile (43, 44) étant transmise, en plus de la position déterminée (54), à au moins un terminal distant (40).

11. Dispositif (1) de localisation d'un objet mobile comprenant des moyens de localisation (2) fonctionnant sur la base d'un système de navigation par satellites, des moyens de communication (3) pour la transmission de données par l'intermédiaire d'un réseau de communication (43, 44) sans fil, des moyens de commande (4) pour le contrôle des moyens de localisation (2), des moyens de communication (3) et des moyens d'alimentation en énergie (5), les moyens de commande (4) étant conçus de façon à ce que les moyens de localisation (2) pouvant être exploités en fonction de la qualité de réception des signaux satellites reçus par les moyens de localisation (2), les moyens de localisation (2) étant conçus de façon à ce qu'ils soient activés pendant une période de recherche maximale ET4 prédéterminée afin de détecter des données satellites et sont désactivés pendant une période de repos ET1 prédéterminée si aucun satellite n'est détecté pendant la période de recherche ET4, **caractérisé en ce que** la période de recherche maximale ET4 est prédéterminée en fonction de la qualité de réception des signaux satellites reçus.

12. Dispositif selon la revendication 11, **caractérisé en ce qu'**au moins un élément de commande (23, 24, 25) est prévu, par l'intermédiaire duquel au moins une zone de surveillance (53, 70) pouvant être de préférence modifiée, activée ou désactivée sans fil, de préférence une deuxième fonction correspondant à l'au moins un élément de commande (23, 24, 25) en fonction de la durée d'actionnement.

13. Dispositif selon l'une des revendications 11 ou 12, **caractérisé en ce que** le dispositif est conçu comme un collier (10) pour animaux, plus particulièrement pour des chiens ou des chats.

14. Dispositif selon la revendication 13, le collier (10) comprenant deux boîtiers disposés sur des côtés opposés du collier (10), un premier boîtier (11) contenant les moyens de localisation (2) et un deuxième boîtier (12) contenant les moyens de communication (3), les moyens de commande (4) et les moyens d'alimentation en énergie (5), les moyens de localisation étant reliés, par l'intermédiaire de câbles électriques insérés dans le collier, avec les moyens de commande, les moyens d'alimentation en énergie et les moyens de communication et le deuxième boîtier (12) comprenant de préférence des contacts électriques (20) par l'intermédiaire desquels les moyens de commande peuvent être programmés et les moyens d'alimentation en énergie peuvent être rechargés, les moyens de communication comprenant de préférence un module GSM et, dans le deuxième boîtier, une ouverture verrouillable (21) étant prévue pour l'insertion d'une carte SIM, le premier boîtier (11) et le deuxième boîtier (12), le logement de la carte SIM (21) et les éléments de commande (23, 24, 25) disposés dans le premier boîtier étant conçus de préférence de manière étanche à l'eau.

15. Dispositif selon l'une des revendications 11 à 14, **caractérisé en ce que** les moyens de commande (4) comprennent des moyens de traitement de données, plus particulièrement un microprocesseur, pour le traitement des données fournies par les moyens de localisation (2) et **en ce que** les moyens de localisation (2) comprennent un récepteur GPS.
